# EUROPEAN PATENT SPECIFICATION

(11) **EP 4 173 892 B1**
(45) Date of publication and mention of the grant of the patent: **06.11.2024**
(21) Application number: 22204834.0
(22) Date of filing: 31.10.2022
(51) Int. Cl.: B60Q 1/06, B60Q 1/076

(54) **AUTOMOTIVE LUMINOUS DEVICE**
LEUCHTVORRICHTUNG FÜR KRAFTFAHRZEUGE
DISPOSITIF LUMINEUX POUR AUTOMOBILE

(30) Priority: 29.10.2021 FR 2111524
(43) Date of publication of application: 03.05.2023
(73) Proprietor: Valeo Vision, 93012 Bobigny Cedex (FR)
(72) Inventor: GALLEGO EXTREMERA, Juan Manuel, 23600 Martos (ES); FERNANDEZ- ESPAÑA ROMERO, Guillermo, 23600 Martos (ES); GOMEZ RAMIREZ, Manuel, 23600 Martos (ES); VARGAS RIZQUEZ, Jose Miguel, 23600 Martos (ES)
(74) Representative: Valeo Visibility

(56) References cited:
- EP-A1- 3 290 270
- EP-A1- 3 505 396
- EP-A2- 2 719 579
- DE-A1- 102009 033 910
- US-A1- 2005 190 571
- US-A1- 2018 118 092

## Description

This invention belongs to the field of the mechanical arrangements for adjusting the internal position of the elements of an automotive luminous device.

Automotive lighting market can be considered one of the most competitive ones and new lighting functionalities are constantly required.

This technical development affects basic arrangements in the lighting device, such as levelling. In some cases, digital levelling may be performed in more top-tier devices, but low-range devices still trust on mechanical levellers.

Lately, the position and operation of these levellers are affected by modern shapes and functionalities, and it is sometimes difficult to arrange a leveller in the space where it is intended to be placed.

However, the position of a leveller is well studied, since it must cooperate with its functionality, which requires an easy access to the ball socket joint of the lighting module to be adjusted.

Normally, there are more than one lighting module to be positioned, so the leveller arrangement needs different parts to transmit the levelling movement to both lighting modules, see for instance EP 2 719 579 A2 or US 2018/118092 A1. This usually involves a big arrangement which often hits some parts of the lighting device, making the overall design of the lighting device more complicated.

A way of improving the size and shape of this levelling arrangement, or at least its impact on the internal room of the headlamp, would be desirable to solve this problem.

The present invention provides a solution for this problem by means of an automotive luminous device comprising
- a leveller comprising a leveller motor and a leveller shaft configured to be moved by the leveller motor, the leveller shaft comprising a shaft connection
- a transmission element with a base bearing two ball socket connections, a first ball socket connection and a second ball socket connection , wherein the first ball socket connection is adapted to match with the shaft connection of the leveller shaft and has a cylindrical shape, wherein the first ball socket connection has a first attachment direction and the second ball socket connection has a second attachment direction.
- a first lighting module rigidly attached to the transmission element
- a second lighting module comprising an adjustment connection configured to match with the second ball socket
   connection of the transmission element.
- the transmission element consists in a base plate extending transversaly to the first and second attachment directions, each side of the plate bearing one of the first and second ball socket connections.

An automotive luminous device with such a transmission element saves space, since there is no need of intermediate parts which transmit the force from the leveller shaft to the second lighting module. In this case, the transmission element perform both actions, receiving the force and transmitting the same to both lighting modules.

Due to the fact that only one part is needed, costs and space are saved, thus improving the design of the luminous device. The base is advantageously a base plate, each side of the plate bearing a connection : this design is extremely compact and allows to save a lot of space in the direction of the shaft of the leveller.

Further, since there are not further intermediate parts, accuracy is improved, by avoiding deformations in these intermediate parts.

In some particular embodiments, the transmission element comprises attachment means to fix the transmission element to the first light module. In some particular embodiments, the first light module comprises a bracket rigidly attached to the first light module and the attachment means fix the transmission element to the bracket.

The bracket element is an element which is rigidly attached to the lighting module, so that the forces transmitted to the bracket are immediately transmitted to the lighting module.

In some particular embodiments, the attachment means comprise screws and/or clipping means.

Screws provide a solid attachment and positioning with respect to the bracket. Clipping is easier than screwing and require less time and effort, but may be a weaker joint in some cases.

In some particular embodiments, the leveller allows manual operation and automatic operation.

This invention may be used with both manual and automatic operation of the leveller, since the joint of the invention does not have any constraints in this sense.

In some particular embodiments,
- the shaft connection and the adjustment connection are ball studs.

Ball studs are especially useful for this type of joints, since they provide the adequate movement options in terms of adjusting the position of the lighting module with respect to the leveller.

An attachment direction should be understood in the sense of perpendicularly approaching the ball socket connection. Since the ball socket connection has an axis symmetry, the axis of symmetry is the corresponding attachment direction. In any case, the skilled person is perfectly able to identify the attachment direction in a ball socket connection.

In some particular embodiments, the first attachment direction and the second attachment direction are contained in the same plane. In other particular embodiments, the first attachment direction and the second attachment direction are contained in different planes.

In some cases, due to the particular shape of the lighting device, it is advantageous that both first and second attachment directions are contained in the same plane and, in other configurations, it is advantageous that there is an offset between both planes. The present invention may perfectly adapt to both situations.

When the attachment directions are contained in different planes, the transmission element may be more compact, since the ball socket connections may overlap in a plane view; when the attachment directions are in the same plane a thicker plate is needed to mould both connections in the same plane.

In any of these cases, the transmission element may easily be obtained by injection moulding, which results in a very cheap and effective way of solving this problem.

In some particular embodiments, the first lighting module and/or the second lighting module comprises at least one solid-state light source. The term "solid state" refers to light emitted by solid-state electroluminescence, which uses semiconductors to convert electricity into light. Compared to incandescent lighting, solid state lighting creates visible light with reduced heat generation and less energy dissipation. The typically small mass of a solid-state electronic lighting device provides for greater resistance to shock and vibration compared to brittle glass tubes/bulbs and long, thin filament wires. They also eliminate filament evaporation, potentially increasing the lifespan of the illumination device. Some examples of these types of lighting comprise semiconductor light-emitting diodes (LEDs), organic light-emitting diodes (OLED), or polymer light-emitting diodes (PLED) as sources of illumination rather than electrical filaments, plasma or gas.

A matrix arrangement is a typical example for these light modules. The rows may be grouped in projecting distance ranges and each column of each group represent an angle interval. This angle value depends on the resolution of the matrix arrangement, which is typically comprised between 0.01º per column and 0.5º per column. As a consequence, many light sources may be managed at the same time.

In some particular embodiments, the first lighting module and/or the second lighting module further comprises an optical element, such as a light filter or a collimator, adapted to receive the light emitted by the solid-state light source and project it outside the lighting module.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
[Fig. 1] and [Fig. 2] show two general views of some elements of an automotive headlamp according to the invention.
[Fig. 3] and [Fig. 4] show some elements of a different embodiment of a lighting device according to the invention.
[Fig. 5] shows a perspective view of a transmission element which is used in some of the embodiments of an automotive lighting device according to the invention.
[Fig. 6] shows an automotive lighting device with the arrangement described in the previous figures, suitable to be installed in an automotive vehicle.

In these figures, the following reference numbers are used for each of the following elements:
- 1: Housing of the lighting device
- 2: Shaft connection
- 3: Leveller motor
- 4: Leveller shaft
- 5: Bracket
- 6: Transmission element
- 7: First connection of the transmission element
- 8: Second connection of the transmission element
- 9: Adjustment connection
- 10: Lighting device
- 11: First light module
- 12: Second light module

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications falling within the scope of the appended claims should be included.

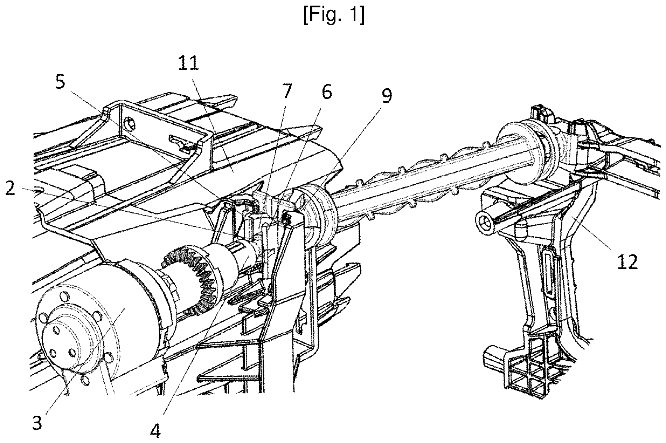

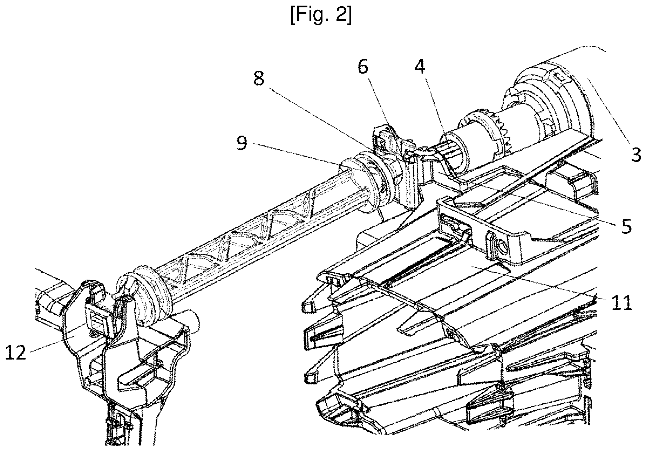

Figures 1 and 2 show two general views of some elements of an automotive headlamp according to the invention.

Firstly, this automotive headlamp comprises two lighting modules 11, 12 arranged inside the housing. These lighting modules are arranged to project light outside the housing.

The orientation of these lighting modules 11, 12 may be adjusted by means of a leveller. The leveller comprises a leveller motor 3 which is configured to move a leveller shaft 4, which is a shaft with a shaft connection 2 in the shape of a ball stud at its end. To create a suitable interaction between the leveller and the first lighting module 11, the first lighting module 11 comprises a bracket 5, so that the transmission element 6 may be attached thereto and transmit the movement of the leveller shaft 4 directly to the first lighting module.

This transmission element 6 consists of a base plate bearing two ball socket connections, one on each side of the base plate: a first ball socket connection 7 and a second ball socket connection 8. In this case, the first ball socket connection 7 has a cylindrical shape, i.e. it is open at is both ends. This design is advantageous, since it allows replacement of the leveller shaft 4 in the event it fails.

The use of a ball socket connection to receive the ball stud of the leveller shaft is not new in the field of lighting module levellers. The contribution of this invention is the shape and functionality of the transmission element 6. Indeed, its plate based design makes it very compact and allows to gain a lot of space in the direction of transmission of the leveller shaft compared to known designs

This transmission element 6 receives the force of the shaft connection 2 in the first ball socket connection 7, as explained before, and transmits this movement to the bracket 5 and, therefore, to the first lighting module.

The same transmission element 6 also transmits the movement of the leveller shaft 4 to the second ball socket connection 8, which receives the connection of the second module ball stud 9. The second module ball stud 9 is rigidly attached to the second lighting module 12, so that the force is immediately transmitted from the leveller to the second lighting device 12 as well.

In these figures 1 and 2, it is seen that the attachment direction of both the leveller shaft 4 (first attachment direction) and of the ball stud 9 (second attachment direction) are comprised in the same plane. This is due to the particular design of this embodiment of lighting device.

In these figures1 and 2, it may also be observed how the transmission element 6 is clipped to the bracket 5, thus ensuring a solid attachment between the transmission element 6 and the first lighting module 11. More specifically, the base plate is slided and locked into an opposite double groove portion of the bracket 5, each groove actually receiving a lateral edge of the plate. However, any other suitable fixing means are indicated to realize the attachment between the transmission element 6 and the bracket. For example, screwing or gluing may be used in this case. A combination of clipping or sliding with screwing in order to lock and secure the positioning of the transmission element 6 can be used.

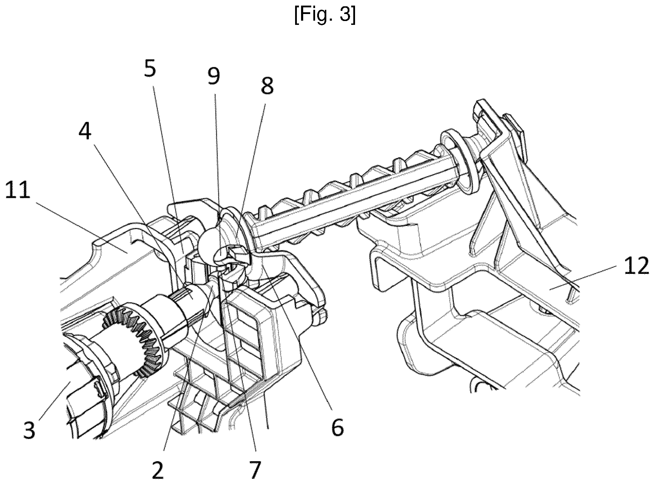

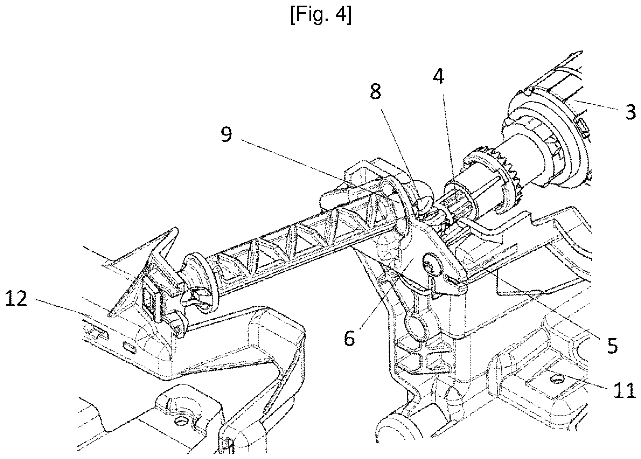

Figures 3 and 4 shows some elements of a different embodiment of a lighting device according to the invention.

In this case, the operation of the levelling arrangement would be the same: the transmission element 6 receives the force of the shaft connection 2 in the first ball socket connection 7 and transmits this movement to the bracket 5 and, therefore, to the first lighting module 11. The same transmission element 6 also transmits the movement of the leveller shaft 4 to the second ball socket connection 8, which receives the connection of the second module ball stud 9. The second module ball stud 9 is rigidly attached to the second lighting module 12, so that the force is immediately transmitted from the leveller to the second lighting device 12 as well.

In this case, it is seen that the attachment direction of the leveller shaft 4 (first attachment direction) and of the ball stud 9 (second attachment direction) are comprised in different planes. This is due to the particular design of this embodiment of the transmission element. It advantageously allows to reduce the thickness of the base plate and also to reuse already existing designs of ball socket, allowing to save mechanical validation for the coupling parts of the transmission element

In these figures 3 and 4, it may also be observed how the transmission element 6 is screwed to the bracket 5, thus ensuring a solid attachment between the transmission element 6 and the first lighting module 11. At this end, the base plate of the transmission element comprises here two holes through which a screw can be inserted. However, any other suitable fixing means are indicated to realize the attachment between the transmission element 6 and the bracket. For example, clipping or gluing may be used in this case. A combination of clipping or sliding with screwing in order to lock and secure the positioning of the transmission element 6 can be used.

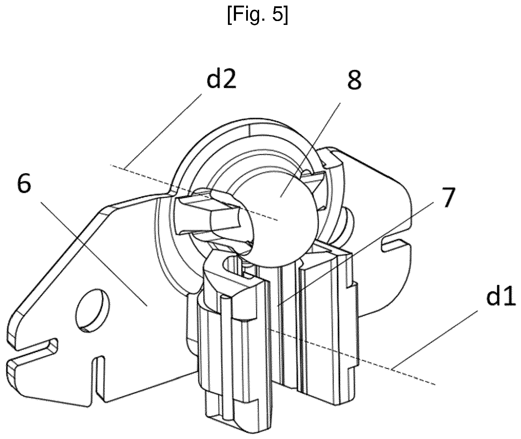

Figure 5 shows a perspective view of the transmission element 6 of the embodiment of figures 3 and.

As may be seen in this figure, this transmission element comprises two ball socket connections: a first ball socket connection 7 and a second ball socket connection 8. The first ball socket connection 7 is intended to receive the connection of a leveller shaft, while the second ball socket connection 8 is intended to receive the connection of a further ball stud connected to the second light module.

In this case, the first ball socket connection 7 has a cylindrical shape, i.e. it is open at is both ends. This design is advantageous, since it allows replacement of the leveller shaft 4 in the event it fails.

In this case, it is seen that the attachment direction of the first ball socket connection 7 (first attachment direction d1) and the attachment direction of the second ball socket connection 8 (second attachment direction d2) are comprised in different planes.

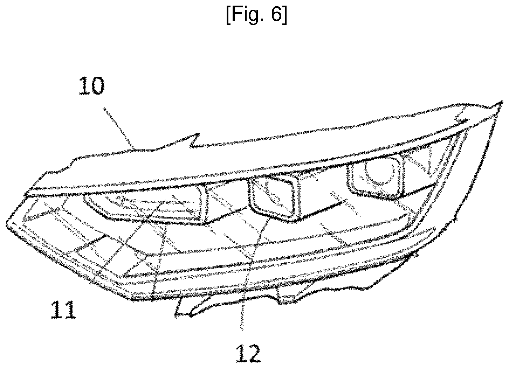

Figure 6 shows an automotive lighting device with the arrangement described in the previous figures, suitable to be installed in an automotive vehicle.

## Claims

1. Automotive luminous device (10) comprising
- a leveller comprising a leveller motor (3) and a leveller shaft (4) configured to be moved by the leveller motor (3), the leveller shaft (4) comprising a shaft connection (2)
- a transmission element (6) with a base bearing two ball socket connections, a first ball socket connection (7) and a second ball socket connection (8), wherein the first ball socket connection (7) is adapted to match with the shaft connection (2) of the leveller shaft (4) and has a cylindrical shape, wherein the first ball socket connection (7) has a first attachment direction (d1) and the second ball socket connection (8) has a second attachment direction (d2)
- a first lighting module (11) rigidly attached to the transmission element (6)
- a second lighting module (12) comprising an adjustment connection (9) configured to match with the second ball socket connection (8) of the transmission element (6),
- **characterized in that** the transmission element (6) consists in a base plate extending transversally to the first and second attachment directions (d1, d2), each side of the plate bearing one of the first and second ball socket connections (7,8).

2. Automotive luminous device (10) according to claim 1, wherein the transmission element (6) comprises attachment means to fix the transmission element (6) to the first light module (11).

3. Automotive luminous device (10) according to claim 2, wherein the first light module (11) comprises a bracket (5) rigidly attached to the first light module (11) and the attachment means fix the transmission element (6) to the bracket (5).

4. Automotive luminous device (10) according to any of claims 2 or 3, wherein the attachment means comprise screws and/or clipping means.

5. Automotive luminous device (10) according to any of the preceding claims, wherein the leveller allows manual operation and automatic operation.

6. Automotive luminous device (10) according to any of the preceding claims, wherein the shaft connection (2) and the adjustment connection (9) are ball studs.

7. Automotive lighting device according to any of the preceding claims, wherein the first attachment direction (d1) and the second attachment direction (d2) are contained in the same plane.

8. Automotive lighting device according to any of the claims 1 to 6, wherein the first attachment direction (d1) and the second attachment direction (d2) are contained in different planes.

9. Automotive lighting device according to any of the preceding claims, wherein the first lighting module (11) and/or the second lighting module (12) comprises at least one solid-state light source.

## Patentansprüche

1. Leuchtvorrichtung für Kraftfahrzeuge (10), die Folgendes umfasst:
- einen Nivellierer, umfassend einen Nivellierermotor (3) und eine Nivelliererwelle (4), dazu ausgelegt, durch den Nivellierermotor (3) bewegt zu werden, wobei die Nivelliererwelle (4) eine Wellenverbindung (2) umfasst
- ein Übertragungselement (6) mit einer Basis, die zwei Kugelpfannenverbindungen, eine erste Kugelpfannenverbindung (7) und eine zweite Kugelpfannenverbindung (8), trägt, wobei die erste Kugelpfannenverbindung (7) dazu angepasst ist, zur Wellenverbindung (2) der Nivelliererwelle (4) zu passen und eine zylindrische Form aufweist, wobei die erste Kugelpfannenverbindung (7) eine erste Befestigungsrichtung (d1) aufweist und die zweite Kugelpfannenverbindung (8) eine zweite Befestigungsrichtung (d2) aufweist
- ein erstes Beleuchtungsmodul (11), das starr am Übertragungselement (6) befestigt ist
- ein zweites Beleuchtungsmodul (12), umfassend eine Anpassungsverbindung (9), dazu ausgelegt, zur zweiten Kugelpfannenverbindung (8) des Übertragungselements (6) zu passen, **dadurch gekennzeichnet, dass** das Übertragungselement (6) aus einer Basisplatte besteht, die sich quer zur ersten und zur zweiten Befestigungsrichtung (d1, d2) erstreckt, wobei jede Seite der Platte eine aus der ersten und der zweiten Kugelpfannenverbindung (7, 8) trägt.

2. Leuchtvorrichtung für Kraftfahrzeuge (10) nach Anspruch 1, wobei das Übertragungselement (6) Befestigungsmittel zum Fixieren des Übertragungselements (6) am ersten Beleuchtungsmodul (11) umfasst.

3. Leuchtvorrichtung für Kraftfahrzeuge (10) nach Anspruch 2, wobei das erste Beleuchtungsmodul (11) eine Halterung (5) umfasst, die starr am ersten Beleuchtungsmodul (11) befestigt ist und wobei die Befestigungsmittel das Übertragungselement (6) an der Halterung (5) fixieren.

4. Leuchtvorrichtung für Kraftfahrzeuge (10) nach einem der Ansprüche 2 oder 3, wobei die Befestigungsmittel Schrauben und/oder Klemmmittel umfassen.

5. Leuchtvorrichtung für Kraftfahrzeuge (10) nach einem der vorhergehenden Ansprüche, wobei der Nivellierer manuellen Betrieb und automatischen Betrieb ermöglicht.

6. Leuchtvorrichtung für Kraftfahrzeuge (10) nach einem der vorhergehenden Ansprüche, wobei die Wellenverbindung (2) und die Anpassungsverbindung (9) Kugelbolzen sind.

7. Leuchtvorrichtung für Kraftfahrzeuge nach einem der vorhergehenden Ansprüche, wobei die erste Befestigungsrichtung (d1) und die zweite Befestigungsrichtung (d2) in der gleichen Ebene enthalten sind.

8. Leuchtvorrichtung für Kraftfahrzeuge nach einem der Ansprüche 1 bis 6, wobei die erste Befestigungsrichtung (d1) und die zweite Befestigungsrichtung (d2) in unterschiedlichen Ebenen enthalten sind.

9. Leuchtvorrichtung für Kraftfahrzeuge nach einem der vorhergehenden Ansprüche, wobei das erste Beleuchtungsmodul (11) und/oder das zweite Beleuchtungsmodul (12) zumindest eine Festkörper-Lichtquelle umfassen.

## Revendications

1. Dispositif lumineux automobile (10) comprenant :
- un niveleur comprenant un moteur de niveleur (3) et un arbre de niveleur (4) configuré pour être déplacé par le moteur de niveleur (3), l'arbre de niveleur (4) comprenant une connexion d'arbre (2)
- un élément de transmission (6) comprenant une base portant deux connexions à rotule, une première connexion (7) à rotule et une seconde connexion (8) à rotule, la première connexion (7) étant adaptée pour correspondre à la connexion d'arbre (2) de l'arbre de niveleur (4) et ayant une forme cylindrique, la connexion à rotule de la première connexion (7) ayant une première direction de fixation (d1) et la connexion à rotule de la seconde connexion (8) ayant une seconde direction de fixation (d2)
- un premier module d'éclairage (11) fixé solidement à l'élément de transmission (6)
- un second module d'éclairage (12) comprenant une connexion de réglage (9) configurée pour correspondre à la seconde connexion (8) de l'élément de transmission (6),
**caractérisé en ce que** l'élément de transmission (6) consiste en une plaque s'étendant transversalement aux première et seconde directions de fixation (d1, d2), chaque côté de la plaque portant une connexion à rotule (7,8).

2. Dispositif lumineux automobile (10) selon la revendication précédente, l'élément de transmission (6) comprenant des moyens de fixation pour fixer l'élément de transmission (6) au premier module d'éclairage (11).

3. Dispositif lumineux automobile (10) selon la revendication 2, le premier module d'éclairage (11) comprenant un support (5) fixé solidement au premier module d'éclairage (11) et les moyens de fixation fixant l'élément de transmission (6) au support (5).

4. Dispositif lumineux automobile (10) selon l'une quelconque des revendications 2 et 3, les moyens de fixation comprenant des vis et/ou des moyens de clipsage.

5. Dispositif lumineux automobile (10) selon l'une quelconque des revendications précédentes, le niveleur permettant un fonctionnement manuel et un fonctionnement automatique.

6. Dispositif lumineux automobile (10) selon l'une quelconque des revendications précédentes,
- les première (7) et seconde (8) connexions de l'élément de transmission (6) étant des connexions à rotule et
- la connexion de l'arbre (2) et la connexion de réglage (9) étant des pivots à rotule.

7. Dispositif d'éclairage automobile selon l'une quelconque des revendications précédentes, la première direction de fixation (d1) et la seconde direction de fixation (d2) étant contenues dans un même plan.

8. Dispositif d'éclairage automobile selon l'une quelconque des revendications 1 à 6, la première direction de fixation (d1) et la seconde direction de fixation (d2) étant contenues dans des plans différents.

9. Dispositif d'éclairage automobile selon l'une quelconque des revendications précédentes, le module d'éclairage comprenant au moins une source lumineuse à semi-conducteurs.
